# EUROPEAN PATENT SPECIFICATION

(11) **EP 3 520 086 B1**
(45) Date of publication and mention of the grant of the patent: **19.08.2020**
(21) Application number: 17870508.3
(22) Date of filing: 30.10.2017
(51) Int. Cl.: G06T 3/00, G06T 11/60

(54) **DISPLAY APPARATUS AND CONTROL METHOD THEREOF**
ANZEIGEVORRICHTUNG UND ZUGEHÖRIGE KONTROLLMETHODE
APPAREIL D'AFFICHAGE ET SON PROCÉDÉ DE COMMANDE

(30) Priority: 08.11.2016 KR 20160148403
(43) Date of publication of application: 07.08.2019
(73) Proprietor: Samsung Electronics Co., Ltd., Suwon-si, Gyeonggi-do 16677 (KR)
(72) Inventor: KIM, Yong-deok, Suwon-si Gyeonggi-do 16677 (KR); KIM, Bo-eun, Seoul 04971 (KR); KIM, Sung-hyun, Suwon-si Gyeonggi-do 16677 (KR)
(74) Representative: Taor, Simon Edward William
(86) International application number: PCT/KR2017/012083
(87) International publication number: WO 2018/088742

(56) References cited:
- US-A1- 2013 120 354
- US-A1- 2015 015 574
- US-A1- 2015 249 815
- US-A1- 2015 269 781
- US-A1- 2016 048 992
- US-B2- 7 346 408
- Anonymous: "Drawing an Equirectangular Panorama - D. M. Swart", , 29 June 2016 (2016-06-29), XP055616235, Retrieved from the Internet: URL:https://web.archive.org/web/2016062909 1340/https://dmswart.com/2016/06/28/drawin g-a-panorama/ [retrieved on 2019-08-28]

## Description

### Technical Field

Apparatuses and methods consistent with the present disclosure relate to a display apparatus and a control method thereof, and more particularly, to a display apparatus for editing a Virtual Reality (VR) image generated by combining a plurality of images captured from a plurality of different viewpoints and converting the combined image to a planar image, and a control method thereof.

### Background Art

Various types of personal capturing devices have been launched with an increase in interests in Virtual Reality (VR). As a result, the number of personal contents has exponentially increased, and thus consumer demand for editing these contents have increased.

However, a current editing software tool of a VR image has a main purpose of stitching and thus does not support editing such as drawing of a picture on a 360° image with a pen, inserting of a text into the 360° image, or the like.

An existing editing tool of a photo editing app, a photoshop, or the like of a smartphone may be used for performing this editing but does not provide an additional function of a 360° image. In other words, the existing editing tool performs editing on a VR image generated by projecting a spherical VR image onto a plane. In this case, editing may not be performed like a user intends, due to a distortion occurring in a process of projecting the spherical VR image onto the plane.

Therefore, there is a need for a method of performing editing without a distortion by reviewing the distortion in real time.

US 2016048992 discloses an information processing method for causing a computer to acquire an image, and output an output image by separating between an editing area that is a predetermined area where the image is editable on the image and a changing area other than the predetermined area on the image, wherein, in a case where an operation is done on the changing area, the editing area is moved, and in a case where an operation is done on the editing area, the editing area is not moved.

### Disclosure of Invention

### Technical Problem

Exemplary embodiments of the present disclosure overcome the above disadvantages.

The present disclosure provides a display apparatus for performing intuitive editing when a Virtual Reality (VR) image is displayed, and a control method thereof.

### Solution to Problem

According to the invention, there is provided a display apparatus as set out in claim 1 and there is provided a method of controlling a display apparatus as set out in claim 10. Optional features are set out in the dependent claims.

### Advantageous Effects of Invention

According to various exemplary embodiments of the present disclosure, a display apparatus may provide a user with an intuitive and convenient editing function by changing a shape of an object provided from an editing tool when a VR image is displayed.

Additional and/or other aspects and advantages of the disclosure will be set forth in part in the description which follows and, in part, will be obvious from the description, or may be learned by practice of the disclosure.

### Brief Description of Drawings

The above and/or other aspects of the present disclosure will be more apparent by describing certain exemplary embodiments of the present disclosure with reference to the accompanying drawings, in which:
FIG. 1A is a block diagram of a configuration of a display apparatus according to an exemplary embodiment;
FIG. 1B is a block diagram of a detailed configuration of a display apparatus according to an exemplary embodiment;
FIGS. 2A through 2D illustrate an example of a projection method according to an exemplary embodiment;
FIGS. 3A through 3C illustrate a change in a size of an object according to an exemplary embodiment;
FIGS. 4A through 4C illustrate a change in a position of an object according to an exemplary embodiment;
FIG. 5 illustrates a type of an object according to an exemplary embodiment of;
FIGS. 6A and 6B illustrate a method of changing a projection point according to an exemplary embodiment;
FIGS. 7A through 7F illustrate a process of editing a Virtual Reality (VR) image according to an exemplary embodiment;
FIG. 8 illustrates a screen that is being edited, according to an exemplary embodiment; and
FIG. 9 is a flowchart of a method of controlling a display apparatus according to an exemplary embodiment.

### Best Mode for Carrying out the Invention

### Mode for the Invention

Certain exemplary embodiments of the present disclosure will now be described in greater detail with reference to the accompanying drawings.

In the following description, same drawing reference numerals are used for the same elements even in different drawings. The matters defined in the description, such as detailed construction and elements, are provided to assist in a comprehensive understanding of the disclosure. Thus, it is apparent that the exemplary embodiments of the present disclosure can be carried out without those specifically defined matters. Also, well-known functions or constructions are not described in detail since they would obscure the disclosure with unnecessary detail.

Hereinafter, various exemplary embodiments of the present disclosure will be described in detail with reference to the attached drawings.

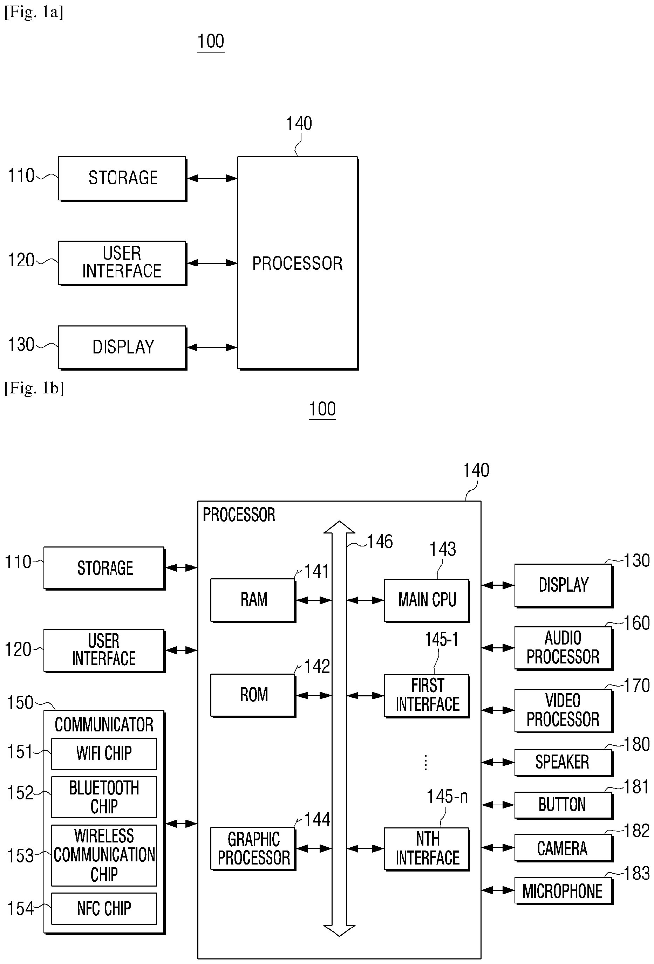

FIG. 1A is a block diagram of a configuration of a display apparatus 100 according to an exemplary embodiment

As shown in FIG. 1A, the display apparatus 100 includes a storage 110, a user interface 120, a display 130, and a processor 140.

The display apparatus 100 may be an apparatus that displays and edits an image or a video. For example, the display apparatus 100 may be realized as a notebook computer, a desktop personal computer (PC), a smartphone, or the like, and any apparatus which displays and edits an image or a video is not limited and may be applied to the display apparatus 100.

In particular, the display apparatus 100 may be an apparatus that displays and edits a Virtual Reality (VR) image or video. Here, the VR image may be an image generated by combining a plurality of images captured from a plurality of different viewpoints and converting the combined image to a plane.

In other words, the VR image may be an image generated by capturing a plurality of images so as to include all directions based on a capturing person, stitching the plurality of captured images, and converting the stitched image to a plane. However, the VR image is not limited thereto and thus may be generated by capturing a plurality of images so as to include merely some directions not all directions.

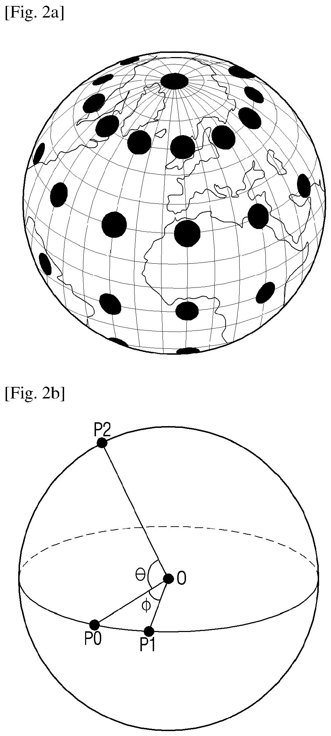

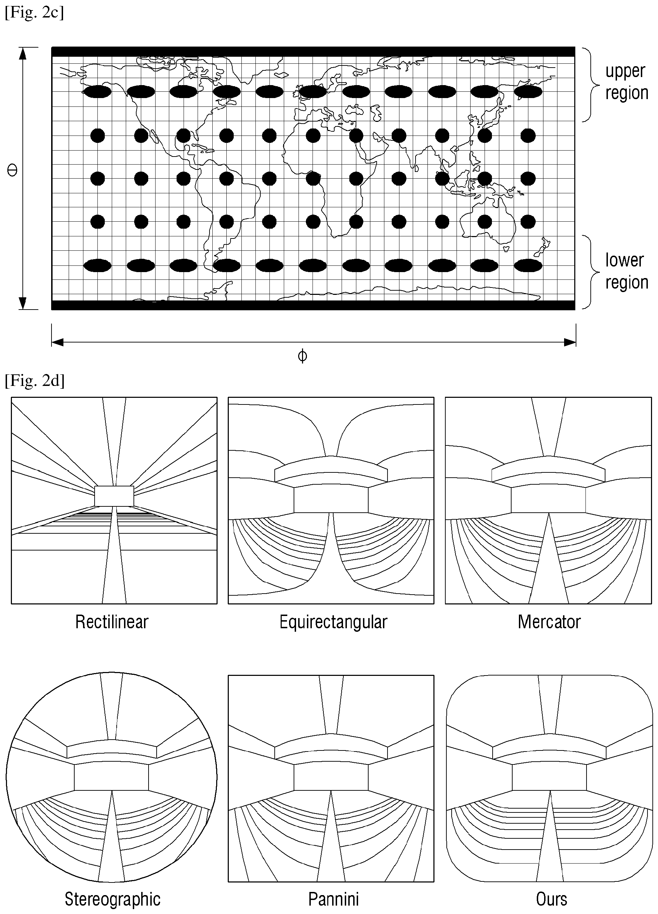

If a plurality of images captured from a plurality of different viewpoints are stitched, a spherical VR image is generated, and an example of the spherical VR image is illustrated in FIG. 2A. Also, if the spherical VR image illustrated in FIG. 2A is converted through an equirectangular projection method, a VR image is generated, and an example of the VR image is illustrated in FIG. 2C.

Here, a conversion of a spherical VR image into a planar VR image is referred to as a projection, and a method of converting the spherical VR image into the planar VR image is referred to as a projection method. Detailed descriptions of the projection and the projection method will be described later with reference to FIGS. 2A, 2B and 2C.

The display apparatus 100 may provide a function of displaying and editing a whole or a part of a VR image.

The storage 110 may store a VR image generated by combining a plurality of images captured from a plurality of different viewpoints and converting the combined image to a plane. The VR image may be an image generated by an external apparatus not the display apparatus 100. In this case, the display apparatus 100 may receive a VR image from an external apparatus and may store the VR image in the storage 110. Alternatively, the display apparatus 100 may include a plurality of cameras, directly perform capturing by using the plurality of cameras, and generate a VR image by processing a plurality of captured images.

The user interface 120 may receive a user input. For example, the user interface 120 may receive a user input for displaying a VR image, a spherical VR image, or the like.

In particular, the user interface 120 may receive a user input for displaying a planar VR image corresponding to an area of a spherical VR image. In this case, the user input may be an input that designates a projection point and a projection angle for designating an area. The user input may also be an input that designates a projection method.

Alternatively, the user interface 120 may receive a user input for changing an area of a VR image that is currently being displayed.

The user interface 120 may receive a user input for editing a VR image that is being displayed. For example, the user interface 120 may receive a user input for executing an editing tool for editing a VR image. The user interface 120 may also receive a user input for changing a size or a position of an object that is provided from an editing tool as the editing tool is executed.

The display 130 may display various types of contents under control of the processor 140. For example, the display 130 may display the VR image and the object provided from the editing tool. The display 130 may also in real time display a VR image that is edited according to an execution of the editing tool.

Also, the display 130 may be realized as a Liquid Crystal Display (LCD) panel, an Organic Light Emitting Diode (OLED), or the like but is not limited thereto. The display 130 may also be realized as a flexible display, a transparent display, or the like.

The processor 140 controls an overall operation of the display apparatus 100.

The processor 140 may convert a VR image into a spherical VR image. Here, the VR image may be an image generated by converting a spherical VR image to a plane through a preset projection method and may be stored in the storage 110.

The processor 140 may generate a spherical VR image by inversely projecting a VR image according to a projection method used for generating a VR image. For example, if an equirectangular projection method is used when generating a VR image, the processor 140 may generate a spherical VR image by respectively mapping a width and a length of a VR image on Φ and θ of a spherical coordinate system.

According to an exemplary embodiment, even if the equirectangular projection method and another type of projection method are used, the processor 140 may generate a spherical VR image by inversely projecting a VR image according to each of the equirectangular projection method and the another type of projection method.

Here, the VR image may store information about a projection method. In this case, the processor 140 may generate a spherical VR image based on the projection method stored in the VR image. Alternatively, the processor 140 may determine a projection method used when generating a VR image by analyzing the VR image.

The processor 140 may generate a planar VR image corresponding to an area of the spherical VR image and control the display 130 to display the planar VR image. For example, the processor 140 may generate a planar VR image by projecting merely an area of a spherical VR image. Alternatively, the processor 140 may generate a planar VR image by projecting a whole of a spherical VR image and cropping merely an area of the VR image.

Here, if a user input for a projection point, a projection angle, and a projection method is received, the processor 140 may determine an area of a spherical VR image based on the projection point and the projection angle, and generate and display a planar VR image corresponding to the area based on the projection method.

Here, the projection point may be a point of an area that a user wants to display on the spherical VR image. The projection angle may be an angle of an area that the user wants to display in a center of the spherical VR image. However, the area that the user wants to display may be a rectangular area. In this case, the projection angle may include an angle formed by upper and lower edges of the rectangular area and the center of the spherical VR image and an angle formed by left and right edges of the rectangular area and the center of the spherical VR image.

However, the present disclosure is not limited thereto, and thus the processor 140 may determine an area that the user wants to display by receiving merely one of the two angles described above. For example, if an angle formed by left and right edges of an area that the user wants to display and the center of the spherical VR image is received, the processor 140 may determine the area that the user wants to display based on an aspect ratio of the display 130.

If the user input for the projection point, the projection angle, and the projection method is not received, the processor 140 may determine an area of the spherical VR image by using a projection point, a projection angle, and a projection method set by default. The processor 140 may also receive a user input for some of the projection point, the projection angle, and the projection method.

If an editing tool for editing a planar VR image is executed according to a user input, the processor 140 may overlay and display a first object provided from the editing tool on the planar VR image. For example, if an editing tool for adding a line onto a planar VR image is executed, the processor 140 may overlay and display a pen tool on the planar VR image.

Here, the first object provided from the editing tool may include at least one selected from a tool Graphical User Interface (GUI) used in an editing function, an editing content generated by the tool GUI, and a content added according to the editing function.

The processor 140 may generate a second object by inversely performing the projection method used for generating the planar VR image on the first object, in order to project the first object as the second object in a spherical coordinate system. In other words, the processor 140 may generate an edited sphere VR image based on a second object generated by reversely projecting the first object according to a projection method used for generating the plane VR image. For example, if an equirectangular projection method is used when generating a VR image, the processor 140 may generate the second object by inversely projecting the first object according to the equirectangular projection method. An operation of editing a spherical VR image based on the second object will be described later.

If a user input for changing a size of the first object is received, the processor 140 may change a size of the second object in response to the user input, change a shape of the first object based on a projection method so as to enable the first object to correspond to the second object having the changed size, and display the first object having the changed shape on the planar VR image. Here, the projection method may be a projection method used for generating the planar VR image.

For example, if a user input for changing the size of the first object by 10 units is received, the processor 140 may change the size of the second object by 10 units. In other words, although the user input for changing the size of the first object by 10 units is received, the size of the first object may not be changed by 10 units and displayed.

The processor 140 may generate the first object of which the shape is changed and corresponds to the second object of which the size is changed by 10 units based on the projection method used for generating the planar VR image. Here, the size of the first object may not be simply changed by 10 units, but the shape of the first object may be changed according to at least one selected from a projection point, a projection angle, and a projection method.

The processor 140 may display the first object, of which the shape is changed, on the planar VR image. In other words, a user may perform editing with checking editing of a spherical VR image not editing of a planar VR image.

If a user input for changing a position of the first object from a first position to a second position is received, the processor 140 may change a position of the second object to a third position corresponding to the second position on the spherical VR image, change a shape of the first object based on a projection method so as to enable the first object to correspond to the second object having the changed position, and display the first object having the changed shape in the second position on the planar VR image. Here, the projection method may be a projection method used for generating the planar VR image.

If a user input for changing the position of the first object from the first position to the second position is received, the processor 140 may change the position of the second object to the third position corresponding to the second position on the spherical VR image. Here, the third position corresponding to the second position may be determined based on the projection method used for generating the planar VR image.

The processor 140 may project the second object, of which the position is changed to the third position based on the projection method used for generating the planar VR image, onto a plane. The processor 140 may generate the first object of which position is changed by projecting the second object of which position is changed. Here, the position of the first object may not be simply changed, but the shape of the first object may be changed according to at least one selected from a projection point, a projection angle, and a projection method.

The processor 140 may display the first object, of which the shape is changed, on the planar VR image. In other words, the user may perform editing with checking editing of the spherical VR image not editing of the planar VR image in real time.

If a user input for changing the position of the first object from the first position to a fourth position in a preset area of the planar VR image is received, the processor 140 may generate and display a planar VR image corresponding to the fourth position.

For example, if a user input for changing the position of the first object to a point of a left boundary of the planar VR image is received, the processor 140 may generate and display a planar VR image where the point of the left boundary is a projection point.

The processor 140 may overlay and display a lattice type guide GUI, which guides a position corresponding to a planar VR image on the spherical VR image, on the planar VR image.

For example, the processor 140 may overlay and display a lattice type GUI corresponding to vertical and horizontal lines of a spherical VR image on a planar VR image. Here, the vertical and horizontal lines of the spherical VR image may respectively correspond to latitude and longitude.

The processor 140 may display a planar VR image corresponding to an area of an edited spherical VR image. For example, if an editing tool for adding a line onto a planar VR image is executed, the processor 140 may overlay and display a pen tool on the planar VR image. Also, if the pen tool is executed to add the line, the processor 140 may add the line onto the spherical VR image, convert the spherical VR image, onto which the line is added, into a planar VR image based on a projection method, and display the planar VR image.

FIG. 1B is a block diagram of a detailed configuration of the display apparatus 100, according to an exemplary embodiment. Referring to FIG. 1B, the display apparatus 100 includes the storage 110, the user interface 120, the display 130, the processor 140, a communicator 150, an audio processor 160, a video processor 170, a speaker 180, a button 181, a camera 182, and a microphone 183. Detailed descriptions of some of elements of FIG. 1B overlapping with elements of FIG. 1A will be omitted.

The processor 140 controls an overall operation of the display apparatus 100 by using various types of programs stored in the storage 110.

According to an exemplary embodiment, the processor 140 includes a Random Access Memory (RAM) 141, a Read Only Memory (ROM) 142, a main Central Processing Unit (CPU) 143, a graphic processor 144, first through nth interfaces 145-1 through 145-n, and a bus 146.

The RAM 141, the ROM 142, the main CPU 143, the graphic processor 144, the first through nth interfaces 145-1 through 145-n, and the like may be connected to one another through the bus 146.

The first through nth interfaces 145-1 through 145-n are connected to various types of elements described above. One of interfaces may be a network interface that is connected to an external apparatus through a network.

The main CPU 143 performs booting by using an Operating System (O/S) stored in the storage 110 by accessing the storage 110. The main CPU 143 also performs various types of operations by using various types of programs and the like stored in the storage 110.

A command set and the like for booting a system are stored in the ROM 142. If power is supplied by inputting a turn-on command, the main CPU 143 boots the system by copying the O/S stored in the storage 110 into the RAM 141 according to a command stored in the ROM 142 and executing the O/S. If the system is completely booted, the main CPU 143 performs various types of operations by copying various types of application programs stored in the storage 110 into the RAM 141 and executing the application programs copied into the RAM 141.

The graphic processor 144 generates a screen including various types of objects including an icon, an image, a text, and the like by using an operator (not shown) and a renderer (not shown). The operator calculates attribute values such as coordinate values, shapes, sizes, colors, and the like at which objects will be displayed according to a layout of the screen based on a received control command. The renderer generates a screen having various types of layouts including an object based on the attribute values calculated by the operator. The screen generated by the renderer is displayed in a display area of the display 130.

The above-described operation of the processor 140 may be performed by a program stored in the storage 110.

The storage 110 stores various types of data such as an O/S software module for driving the display apparatus 100, a projection method module, an image editing module, and the like.

In this case, the processor 140 may display a VR image and provide an editing tool based on information stored in the storage 110.

The user interface 120 receives various types of user interactions. Here, the user interface 120 may be realized as various types according to various exemplary embodiments of the display apparatus 100. For example, the display apparatus 100 may be a notebook computer, a desktop PC, or the like, and the user interface 120 may be a receiver or the like for receiving an input signal from a keyboard or a mouse for interfacing with the notebook computer, the desktop PC, or the like. Also, the display apparatus 100 may be a touch-based electronic device, and the user interface 120 may be a touch screen type that forms an interactive layer structure with a touch pad for interfacing with the touch-based electronic device. In this case, the user interface 120 may be used as the display 130 described above.

The communicator 150 is an element that performs communications with various types of external apparatuses according to various types of communication methods. The communicator 150 includes a Wireless Fidelity (WiFi) chip 151, a Bluetooth chip 152, a wireless communication chip 153, a Near Field Communication (NFC) chip 154, and the like. The processor 140 performs communications with various types of external apparatuses by using the communicator 150.

The WiFi chip 151 and the Bluetooth chip 152 respectively perform communications according to a WiFi method and a Bluetooth method. If the WiFi chip 151 and the Bluetooth chip 152 are used, various types of information may be transmitted and received by transmitting and receiving various types of connection information such as a Subsystem Identification (SSID), a session key, and the like and connecting communications by using the various types of connection information. The wireless communication chip 153 refers to a chip that performs communications according to various types of communication standards such as Institute of Electrical and Electronics Engineers (IEEE), Zigbee, 3rd Generation (3G), 3rd Generation Partnership Project (3GPP), Long Term Evolution (LTE), and the like. The NFC chip 154 refers to a chip that operates according to an NFC method using a band of 13.56 MHz among various types of Radio Frequency Identification (RFID) frequency bands such as 135 kHz, 13.56 MHz, 433 MHz, 860~960 MHz, 2.45 GHz, and the like.

The communicator 150 may perform a unidirectional or bidirectional communication with an external apparatus. If the communicator 150 performs the unidirectional communication with the external apparatus, the communicator 150 may receive a signal from the external apparatus. If the communicator 150 performs the bidirectional communication with the external apparatus, the communicator 150 may receive a signal from the external apparatus and may transmit a signal to the external apparatus.

The audio processor 160 is an element that performs processing with respect to audio data. The audio processor 160 may perform various types of processing, such as decoding, amplifying, noise filtering, and the like, with to the audio data.

The video processor 170 is an element that performs processing with respect to video data. The video processor 170 may perform various types of image processing, such as decoding, scaling, noise filtering, frame rate converting, resolution converting, and the like, with respect to the video data.

The speaker 180 is an element that outputs various types of audio data, various types of notification sounds, voice messages, and the like processed by the audio processor 160.

The button 181 may be various types of buttons such a mechanical button, a touch pad, a wheel, and the like that are formed in an arbitrary area of a front part, a side part, a back part, or the like of an external appearance of a main body of the display apparatus 100.

The camera 182 is an element that captures a still image or a moving picture image under control of the user. The camera 182 may be realized as a plurality of cameras including a front camera, a back camera, and the like.

The microphone 183 is an element that receives a user voice or other sounds and converts the user voice or the other sounds into audio data.

Also, although not shown in FIG. 1B, according to an exemplary embodiment, the display apparatus 100 may further include various types of external input ports for connecting the display apparatus 100 to various types of external terminals such as a Universal Serial Bus (USB) port through which a USB connector may be connected to the display apparatus 100, a headset, a mouse, a Local Area Network (LAN), and the like, a Digital Multimedia Broadcasting (DMB) chip that receives and processes a DMB signal, various types of sensors, and the like.

Hereinafter, basic elements and various exemplary embodiments to facilitate understanding of the present disclosure will be described.

FIGS. 2A through 2D illustrate an example of a projection method according to an exemplary embodiment.

FIG. 2A illustrates an example of a spherical VR image. FIG. 2C illustrates a VR image generated by converting the spherical VR image of FIG. 2A to a plane based on an equirectangular projection method.

FIG. 2B illustrates an exemplary representation of the spherical VR image in FIG. 2A. According to an exemplary embodiment, FIG. 2B, illustrates example of a central point O and a projection point P0 of the spherical VR image. Φ of a spherical coordinate system denotes an angle formed between a straight line going from the central point O to the projection point P0 and a straight line going from the central point O to a first point P1 on a horizontal plane. If the projection point P0 and the first point P1 are not on the horizontal plane, an angle may be determined based on two points on the horizontal plane onto which the projection point P0 and the first point P1 are respectively projected.

Here, the horizontal plane may be a basis unrolling a spherical VR image on a plane and may be set in another direction. For example, the horizontal plane may be set so as to be orthogonal to a horizontal plane of FIG. 2B. Also, the processor 140 may determine the horizontal plane based on the projection point P0.

According to an exemplary embodiment, θ of the spherical coordinate system may be an angle formed between a straight line going from the central point O to a second point P2 and the horizontal plane.

The processor 140 may generate a VR image by converting a spherical VR image to a plane based on a correspondence relation between Φ and θ of the spherical coordinate system and x and y of an orthogonal coordinate system. The correspondence relation may depend on a projection method.

If an equirectangular projection method is used as shown in FIG. 2C, shapes of circular dots displayed on the spherical VR image of FIG. 2A may be changed as the spherical VR image is projected onto a plane. In other words, the shapes of the circular dots illustrated in FIG. 2A may be changed into elliptical shapes as the locations of the circular dots are closer to the upper and lower regions of the VR image of FIG. 2C. This is a problem occurring as the spherical VR image is illustrated on a rectangular plane, and a distortion may become serious as the locations of the circular dots are closer to the upper and lower regions of FIG. 2C. However, if another type of projection method is used, an area where a distortion occurs may be changed.

The equirectangular projection method is illustrated in FIGS. 2A and 2B, but the present disclosure is not limited thereto. For example, a spherical VR image may be converted into a VR image by using various types of projection methods such as rectilinear, cylindrical, Mercator, stereographic, pannini, and ours projection methods, and the like. An example of a VR image converted to a plane through various types of projection methods is illustrated in FIG. 2C.

Hereinafter, for convenience of description, an equirectangular projection method will be described as being used. However, technology of the present application may be applied even if other types of projection methods are used.

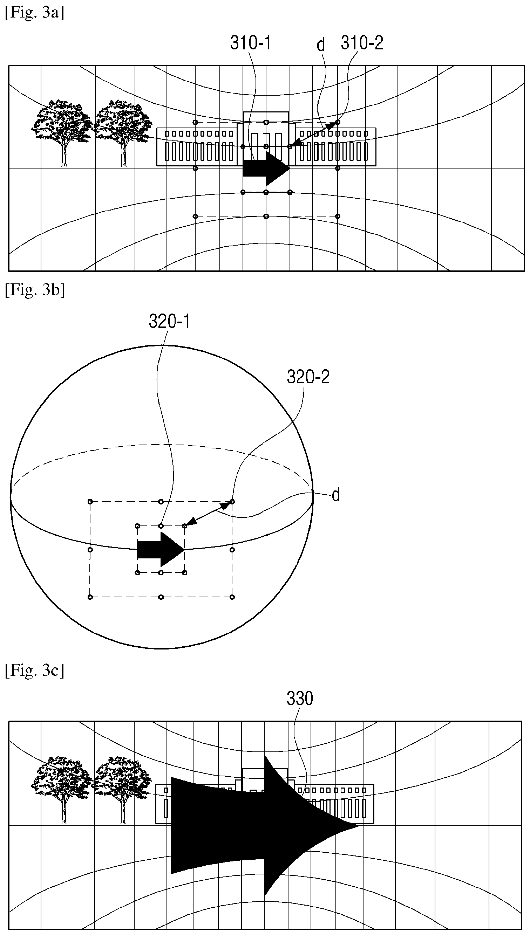

FIGS. 3A through 3C illustrate a change in a size of an object according to an exemplary embodiment of the present disclosure.

As shown in FIG. 3A, if an editing tool for editing a planar VR image is executed according to a user input when the planar VR image is displayed, the processor 140 may overlay and display a first object provided from the editing tool on the planar VR image.

For example, if a user input for displaying a plurality of stickers and selecting one of the plurality of stickers is executed, the processor 140 may overlay and display a sticker having a preset shape on the planar VR image. Here, a sticker may be an arrow, an emoticon, or the like, selected from a GUI editing tool.

The processor 140 may also receive a user input for changing a size of the first object. For example, the processor 140 may receive a user input for changing the size of the first object from a first size 310-1 to a second size 310-2.

If a user input for changing the size of the first object is received, the processor 140 may change a size of a second object in response to the user input as shown in FIG. 3B. Here, the second object may be an object that is positioned on a spherical coordinate system and corresponds to the first object. In other words, the processor 140 may generate a second object by inversely converting a first object based on a projection method.

For example, if a user input for changing the size of the first object from the first size 310-1 to the second size 310-2 is received, the processor 140 may change a size of the second object by a difference d between the first size 310-1 and the second size 310-2. In other words, the processor 140 may change the size of the second object from a third size 320-1 to a fourth size 320-2 on a second layer. According to an exemplary embodiment, the processor 140 may change the size of the second object from the third size 320-1 to the fourth size 320-2 on the second layer according a difference d. Here, a shape of the second object may not be changed, but merely the size of the second object may be changed.

However, the present disclosure is not limited thereto, and thus if a user input for changing the size of the first object from the first size 310-1 to the second size 310-2 is received, the processor 140 may calculate a plurality of coordinates corresponding to a plurality of vertexes of the second size on a spherical coordinate system and change the size of the second object in response to the plurality of calculated coordinates. In this case, the shape of the second object may be changed.

The second object and the spherical VR image may be respectively included on different layers. For example, the spherical VR image may be included on a first layer, and the second object may be included on a second layer. In other words, although the size of the second object is changed, the spherical VR image may not be changed.

The processor 140 may generate a first object, of which shape is changed, by converting a second object, of which a size is changed, to a plane based on a preset projection method. Here, the processor 140 may project a layer including the second object onto a plane.

The processor 140 may project a layer including a second object onto a plane according to a projection point, a projection angle, and a projection method used when projecting a spherical VR image onto a planar VR image.

As described above, an area may be distorted in a projection process. As the distortion occurs, a size of a first object may not be simply changed, but a shape of the first object may be distorted. As shown in FIG. 3C, the processor 140 may display a first object 330, of which shape is changed, on a planar VR image.

If a user input for merging the first object 330 having the changed shape with the planar VR image is received, the processor 140 may generate an edited spherical VR image by merging a first layer including the spherical VR image with a second layer including the first object 330. The processor 140 may display a planar VR image corresponding to an area of the edited spherical VR image.

The processor 140 may overlay and display a lattice type guide GUI, which guides a position corresponding to the planar VR image on the spherical VR image, on the planar VR image.

For example, the lattice type guide GUI may correspond to vertical and horizontal lines of the spherical VR image. A distance between the vertical and horizontal lines may be preset. Alternatively, the distance may be changed under control of the user.

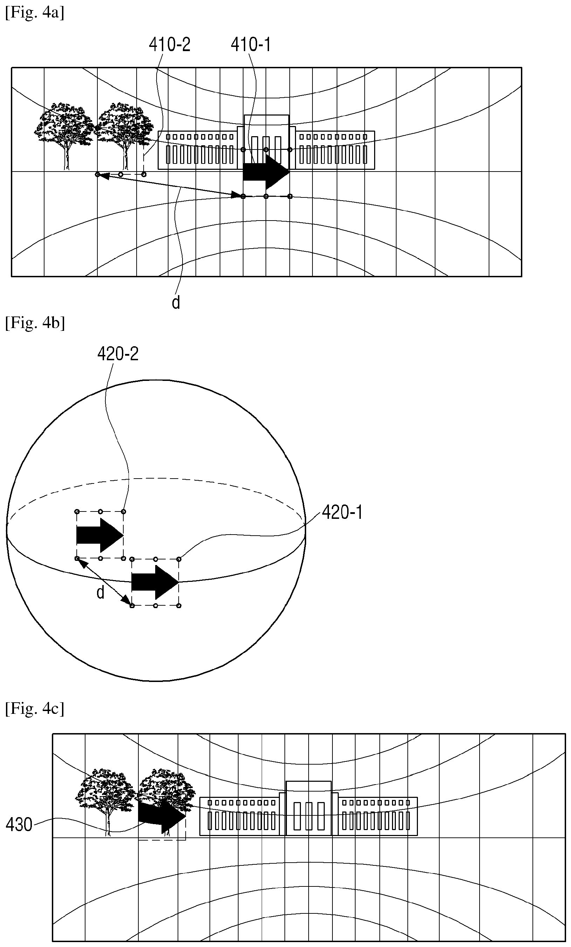

FIGS. 4A through 4C illustrate a change in a position of an object according to an exemplary embodiment of the present disclosure.

As shown in FIG. 4A, if an editing tool for editing a planar VR image is executed according to a user input when the planar VR image is displayed, the processor 140 may overlay and display a first object provided from the editing tool on the planar VR image.

The processor 140 may also receive a user input for changing a position of the first object. For example, the processor 140 may receive a user input for changing the position of the first object from a first position 410-1 to a second position 410-2.

If the user input for changing the position of the first object is received, the processor 140 may change a position of a second object in response to the user input. Here, the second object may be an object that is positioned on a spherical coordinate system and corresponds to the first object. In other words, the processor 140 may generate the second object by inversely converting the first object based on a projection method.

For example, if a user input for changing the position of the first object from the first position 410-1 to the second position 410-2 is received, the processor 140 may change the position of the second object by a difference d between the first position 410-1 and the second position 410-2. In other words, the processor 140 may change the position of the second object from a third position 420-1 to a fourth position 420-2 on a second layer. According to an exemplary embodiment, the processor 140 may change the position of the second object from the third position 420-1 to the fourth position 420-2 on the second layer according to a distance d. Here, a shape of the second object may not be changed, but merely the position of the second object may be changed.

However, the present disclosure is not limited thereto, and thus if a user input for changing the position of the first object from the first position 410-1 to the second position 410-2 is received, the processor 140 may calculate a plurality of coordinates corresponding to a plurality of vertexes of the second position 410-2 on a spherical coordinate system and change the position of the second object in response to the plurality of calculated coordinates. In this case, the shape of the second object may be changed.

The second object and the spherical VR image may be respectively included on different layers. For example, the spherical VR image may be included on a first layer, and the second object may be included on a second layer. In other words, although the position of the second object is changed, the spherical VR image may not be changed.

The processor 140 may generate a first object, of which shape is changed, by converting a second object, of which position is changed, to a plane based on a preset projection method. Here, the processor 140 may project a layer including the second object onto a plane.

The processor 140 may project the layer including the second object according to a projection point, a projection angle, and a projection method used when projecting the spherical VR image onto the planar VR image.

As described above, an area may be distorted in a projection process. As the distortion occurs, the position of the first object may not be simply changed, but merely the shape of the first object may be distorted. As shown in FIG. 4C, the processor 140 may display a first object 430 having a changed shape on a planar VR image.

If a user input for merging the first object 430 having the changed shape with the planar VR image is received, the processor 140 may generate an edited spherical VR image by merging a first layer including the spherical VR image with a second layer including the first object 430. The processor 140 may display a planar VR image corresponding to an area of the edited spherical VR image.

The processor 140 may overlay and display a lattice type guide GUI, which guides a position corresponding to the planar VR image on the spherical VR image, on the planar VR image.

For example, the lattice type guide GUI may correspond to vertical and horizontal lines of the spherical VR image. A distance between the vertical and horizontal lines may be preset. Alternatively, the distance may be changed under control of the user.

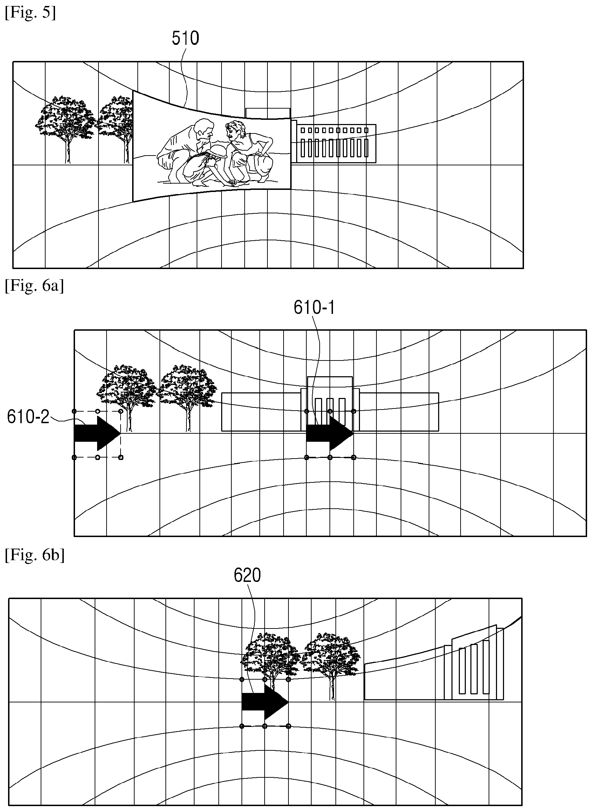

FIG. 5 illustrates a type of an object according to an exemplary embodiment.

The processor 140 may insert an image. The processor 140 may change a shape of an image by using a method as described with reference to FIGS. 3A, 3B, 3C, 4A, 4B and 4C and display an image 510, of which shape is changed, on a planar VR image.

For example, the image has a rectangular shape, but the processor 140 may generate the image 510 of which shape is changed and then display the image 510 having the changed shape on the planar VR image. The processor 140 may also apply a filter to a boundary area between the image 510 having the changed shape and the planar VR image.

However, this is merely an exemplary embodiment, and thus an object provided from an editing tool may include at least one selected from a tool GUI used in an editing function, an editing content generated by the tool GUI, and a content added according to the editing function.

For example, the processor 140 may display an image, a pen, a paint, an eraser, a sticker, a text box, a moving picture image, a filter, and the like on the planar VR image according to the same method.

FIGS. 6A and 6B illustrate a method of changing a projection point according to an exemplary embodiment.

As shown in FIG. 6A, the processor 140 may overlay and display a first object on a planar VR image. If a user input for changing a position of the first object from a first position 610-1 to a second position 610-2 in a preset area of the planar VR image is received, the processor 140 may generate and display a planar VR image corresponding to the second position 610-2.

For example, if a user input for moving the first object to a left boundary is received, the processor 140 may change a projection point to a left side. If a user input for moving the first object to a left boundary is received, the processor 140 may check that there is a user intention of moving an object to another area not to a currently displayed planar VR image and change a displayed area.

As shown in FIG. 6B, the processor 140 may generate and display a planar VR image corresponding to the second position 610-2. In other words, the processor 140 may change a projection point so as to display a second object in a center. Also, a building positioned in the center may be displayed to a right side due to the change in the projection point.

However, the present disclosure is not limited thereto, and thus if a user input for moving a first object to a left boundary, the processor 140 may change a projection point to a preset projection point. Alternatively, the processor 140 may determine a new projection point based on at least one selected from an existing projection point, a projection angle, and a changed position of the first object.

Alternatively, if the projection point is changed, the processor 140 may change the projection angle. For example, if the projection point is changed, the processor 140 may change the projection angle so as to enable the projection angle to be larger in order to easily search for an area of a VR image.

Merely a change in a position of a first object has been described above with reference to FIGS. 6A and 6B, but the present disclosure is not limited thereto. For example, if a user input for enlarging the first object in a preset size or more is received, the processor 140 may enlarge and display a projection angle.

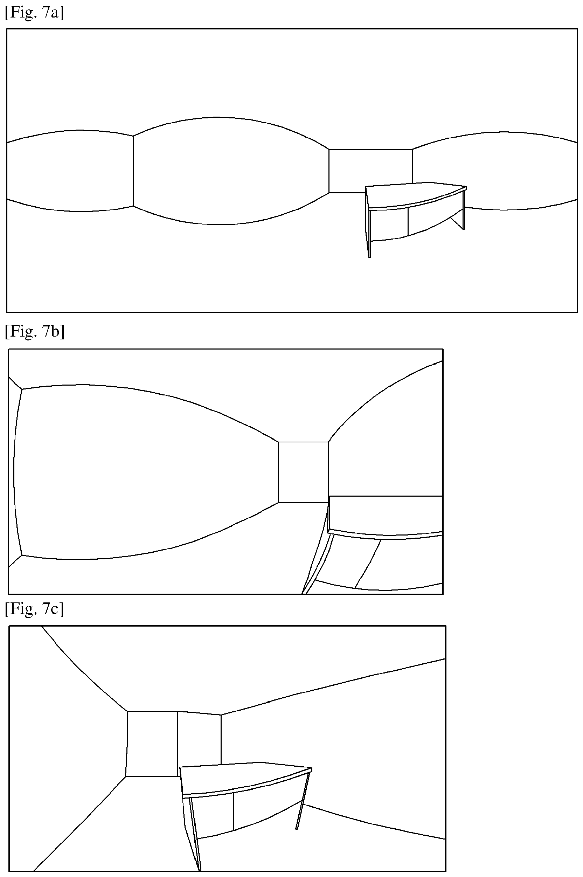

FIGS. 7A through 7F illustrate a process of editing a VR image according to an exemplary embodiment.

As shown in FIG. 7A, the processor 140 may display a VR image generated by converting a spherical VR image to a plane based on a preset projection method.

Alternatively, as shown in FIG. 7B, the processor 140 may display an area of the VR image converted to the plane. In other words, the processor 140 receive projection parameters such as a projection point, a projection angle, a projection method, and the like from the user and display an area of the VR image converted to the plane. The processor 140 may also change an image, which is being displayed, by receiving projection parameters from the user in real time.

The processor 140 may display a whole or an area of the VR image converted to the plane according to a user input.

As shown in FIG. 7C, if merely an area of the VR image converted to the plane is displayed, the processor 140 may change and display a projection point in real time according to a user input. A projection point of FIG. 7C is more moved to a left side than a projection point of FIG. 7B.

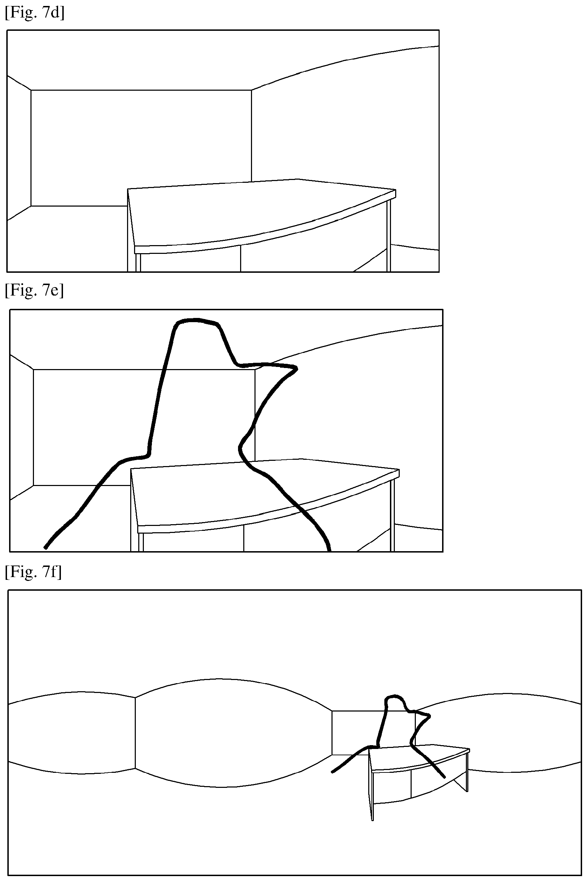

Also, as shown in FIG. 7D, the processor 140 may change and display a projection angle in real time according to a user input. A projection angle of FIG. 7D is more reduced than a projection angle of FIG. 7C. In other words, the user may enlarge an image, which is being displayed, by reducing a projection angle or may reduce an image, which is being displayed, by enlarging the projection angle.

However, the present disclosure is not limited thereto, and thus the processor 140 may display an image by enlarging or reducing the image without changing a projection angle. The processor 140 may also display the image by changing a projection point, a projection angle, and a projection method in real time.

If editing of the user is performed, the processor 140 may display an edited VR image in real time. Here, as shown in FIG. 7E, the processor 140 may display an image, which is being displayed, an editing state thereof or may display a whole of a completely edited VR image as shown in FIG. 7F.

Although there is an input of a movement of a projection point or an enlargement and a reduction of an image, the processor 140 may move the projection point or enlarge and reduce the image with maintaining existing editing contents. For example, although a projection point is moved as shown in FIG. 7C or an image is enlarged as shown in FIG. 7D, the processor 140 may maintain existing editing contents.

In particular, although existing editing contents are not displayed due to the movement of the projection point or the enlargement and reduction of the image, the processor 140 may maintain the existing editing contents.

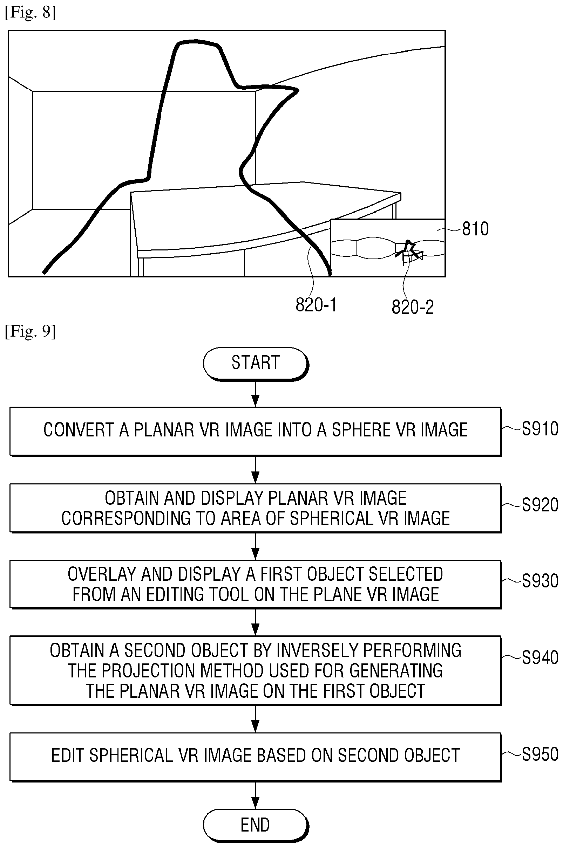

FIG. 8 illustrates a screen that is being edited according to an exemplary embodiment.

As shown in FIG. 8, the processor 140 may display an area of a VR image on a whole screen or may reduce and display a whole VR image 810 in an area of the whole screen.

If an area of a VR image is edited according to a user input, the processor 140 may display an editing result 820-1 of the area in real time. The processor 140 may also display an editing result 820-2 of the whole VR image 810 that is reduced and displayed. Through this operation, the user may edit an area of an image and check how a whole area of the image is edited.

FIG. 9 is a flowchart of a method of controlling a display apparatus according to an exemplary embodiment.

In operation S910, the display apparatus converts a VR image, into a spherical VR image. According to an exemplary embodiment, the VR image is a planar VR image generated by combining a plurality of images captured from a plurality of different viewpoints, According to an exemplary non-limiting embodiment, the spherical VR image may be received from a storage, and as such a conversion operation S910 by the display apparatus may be omitted. In operation S920, the display apparatus generates and displays a planar VR image corresponding to an area of the spherical VR image. In operation S930, if an editing tool for editing the planar VR image is executed according to a user input, the display apparatus overlays and displays a first object provided from the editing tool on the planar VR image. In operation S940, the display apparatus generates a second object by inversely performing the projection method used for generating the planar VR image on the first object, in order to project the first object as the second object in a spherical coordinate system. In operation S950, the display apparatus edits the spherical VR image based on the second object.

Also, the method may further include, if a user input for changing a size of the first object is received, changing a size of the second object in response to the user input, and changing a shape of the first object based on the projection method so as to enable the first object to correspond to the second object having the changed size and displaying the first object having the changed shape on the planar VR image.

The method may further include, if a user input for changing a position of the first object from a first position to a second position is received, changing a position of the second object to a third position corresponding to the second position on the spherical VR image, and changing a shape of the first object based on a projection method so as to enable the first object to correspond to the second object having the changed position and displaying the first object having the changed shape on the planar VR image.

Operation 920 may further include, if a user input for a projection point, a projection angle, and a projection method is received, determining an area of the spherical VR image based on the projection point and the projection angle, and generating and displaying the planar VR image corresponding to the area based on the projection method.

Also, the method may further include, if a user input for changing the position of the first object from the first position to a fourth position in a preset area of the planar VR image is received, generating and displaying a planar VR image corresponding to the fourth position.

The method may further include overlaying and display a lattice type guide GUI, which guides a position corresponding to the planar VR image on the spherical VR image, on the planar VR image.

Also, the method may further include displaying a planar VR image corresponding to an area of an edited spherical VR image.

The first object provided from the editing tool may include at least one selected from a tool GUI used in an editing function, an editing content generated by the tool GUI, and a content added according to the editing function.

According to various exemplary embodiments of the present disclosure as described above, a display apparatus may provide a user with an intuitive and convenient editing function by changing a shape of an object providing from an editing tool when a VR image is displayed.

An equirectangular projection method has been described above as being used, but this is merely for convenience of description. Therefore, technology of the present application may be applied even if other types of projection methods are used.

Also, an image has been mainly described above, but the same method may be applied with respect to each frame of a moving picture image. The user may edit each frame and may perform the same editing with respect to frames displayed for a preset time.

Methods according to various exemplary embodiments of the present disclosure described above may be embodied as an application type that may be installed in an existing electronic device.

The methods according to the various exemplary embodiments of the present disclosure described above may also be embodied by merely upgrading software or hardware of an existing electronic device.

In addition, the various exemplary embodiments of the present disclosure described above may be performed through an embedded server included in an electronic device or an external server of the electronic device.

According to an exemplary embodiment, the elements, components, methods or operations described herein may be implemented using hardware components, software components, or a combination thereof. For example, the hardware components may include a processing device. According to an exemplary embodiment, the display apparatus may include a processing device, such as the image processor or the controller, that may be implemented using one or more general-purpose or special purpose computers, such as, for example, a hardware processor, a CPU, a hardware controller, an ALU, a DSP, a microcomputer, an FPGA, a PLU, a microprocessor or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such a parallel processors.

According to an exemplary embodiment of the present disclosure, the various exemplary embodiments described above may be embodied as software including instructions stored in machine-readable storage media (e.g., computer-readable storage media). A device may an apparatus that calls an instruction from a storage medium, may operate according to the called instruction, and may include an electronic device (e.g., an electronic device A) according to disclosed exemplary embodiments. If the instruction is executed by a processor, the processor may directly perform a function corresponding to the instruction or the function may be performed by using other types of elements under control of the processor. The instruction may include codes generated or executed by a compiler or an interpreter. A machine-readable storage medium may be provided as a non-transitory storage medium type. Here, "non-transitory" means that a storage medium does not include a signal and is tangible but does not distinguish semi-permanent and temporary storages of data in the storage medium.

Also, according to an exemplary embodiment of the present disclosure, a method according to various exemplary embodiments described above may be included and provided in a computer program product. The computer program product may be transacted as a product between a seller and a buyer. The computer program product may be distributed as a type of a machine-readable storage medium (e.g., a type of a compact disc read only memory (CD-ROM)) or may be distributed online through an application store (e.g., play store TM). If the computer program product is distributed online, at least a part of the computer program product may be at least temporally or temporarily generated in a storage medium such as a memory of a server of a manufacturer, a server of an application store, or a relay server.

In addition, according to an exemplary embodiment of the present disclosure, various exemplary embodiments described above may be embodied in a recording medium readable by a computer or a similar apparatus to the computer by using software, hardware, or a combination thereof. In some cases, exemplary embodiments described herein may be embodied as a processor. According to a software embodiment, exemplary embodiments such as processes and functions described herein may be embodied as additional software modules. The software modules may perform at least one or more functions and operations described herein.

Computer instructions for performing a processing operation of a device according to the above-described various exemplary embodiments may be stored in a non-transitory computer-readable medium. The computer instructions stored in the non-transitory computer-readable medium enable a particular device to perform a processing operation in a device according to the above-described exemplary embodiments when being executed by a processor of the particular device. The non-transitory computer readable medium is a medium which does not store data temporarily such as a register, cash, and memory but stores data semi-permanently and is readable by devices. More specifically, the aforementioned applications or programs may be stored in the non-transitory computer readable media such as compact disks (CDs), digital video disks (DVDs), hard disks, Blu-ray disks, universal serial buses (USBs), memory cards, and read-only memory (ROM).

Each of elements according to the above-described various exemplary embodiments (e.g., modules or programs) may include a single entity or a plurality of entities, and some of corresponding sub elements described above may be omitted or other types of sub elements may be further included in the various exemplary embodiments. Alternatively or additionally, some elements (e.g., modules or programs) may be integrated into one entity and then may equally or similarly perform a function performed by each of corresponding elements that are not integrated. Operations performed by modules, programs, or other types of elements according to the various exemplary embodiments may be sequentially, in parallel, or heuristically executed or at least some operations may be executed in different sequences or may be omitted, or other types of operations may be added.

The foregoing exemplary embodiments and advantages are merely exemplary and are not to be construed as limiting the present disclosure. The present teaching can be readily applied to other types of apparatuses. Also, the description of the exemplary embodiments of the present disclosure is intended to be illustrative, and not to limit the scope of the invention as defined by the appended claims.

## Claims

1. A display apparatus (100) comprising:
a storage (110) configured to store a Virtual Reality, VR, image;
a user interface (120);
a display (130); and
a processor (140) configured to:
convert the VR image into a spherical VR image,
obtain a planar VR image corresponding to an area of the spherical VR image according to a projection method,
control the display (130) to display the planar VR image,
in response to a first user input, through the user interface (120), to select a first object from an editing tool for performing a first editing operation on the planar VR image being received, overlay the first object provided by the editing tool to be placed entirely within the planar VR image and control the display (130) to display the first object overlaid on the planar VR image,
obtain a second object by inversely performing the projection method to project the first object as the second object in a spherical coordinate system,
receive a second user input, through the user interface (120), to perform a second editing operation on the first object,
in response to receiving the second user input, apply the second editing operation to the second object in the spherical coordinate system,
change the first object by applying the projection method to the changed second object,
control the display (130) to display the changed first object (330, 430, 510) overlaid on the planar VR image.

2. The display apparatus (100) of claim 1, wherein, in response to the second user input comprising an operation for changing a size of the first object, the processor (140) is configured to:
change a size of the second object based on the user input,
change a shape of the first object based on the second object of which the size is changed according to the projection method.

3. The display apparatus (100) of claim 1, wherein, in response to the user input comprising an operation for changing a position of the first object from a first position (410-1) to a second position (410-2) in the planar VR image, the processor (140) is further configured to:
move the second object to a third position (420-2) in the spherical coordinate system corresponding to the second position in the planar VR image,
change the shape of the first object by performing the projection method on the second object so that the first object to corresponds to the second object having the changed position.

4. The display apparatus (100) of claim 1, wherein, in response to a user input comprising an operation for a projection point, a projection angle, and the projection method, the processor (140) is further configured to:
identify the area of the spherical VR image based on the projection point and the projection angle,
obtain and control the display to display a planar VR image corresponding to the area based on the projection method.

5. The display apparatus (100) of claim 1, wherein, in response to a user input comprising an operation for changing a position of the first object from a first position to a fourth position in a preset area of the planar VR image, the processor (140) is further configured to obtain and control the display (130) to display a planar VR image corresponding to the fourth position.

6. The display apparatus (100) of claim 1, wherein the processor (140) is further configured to overlay a lattice type guide graphical user interface, GUI, on the planar VR image and control the display (130) to display the lattice type guide GUI overlaid on the planar VR image, and
wherein the lattice type guide GUI guides a position corresponding to the planar VR image on the spherical VR image.

7. The display apparatus (100) of claim 1, wherein the processor (140) displays a planar VR image corresponding to the area of the edited spherical VR image.

8. The display apparatus (100) of claim 1, wherein the planar VR image is obtained by converting a combined image, which is obtained by combining a plurality of images captured from a plurality of different viewpoints, to a planar image.

9. The display apparatus (100) of claim 1, wherein the first object provided from the editing tool comprises at least one selected from a tool GUI used in an editing function, an editing content generated by the tool GUI, and a content added according to the editing function.

10. A method of controlling a display apparatus, the method comprising:
converting a VR image into a spherical VR image (S910);
obtaining a planar VR image corresponding to an area of the spherical VR image according to a projection method (S920);
displaying the planar VR image;
in response to a first user input to select a first object from an editing tool for performing a first editing operation on the planar VR image being received, overlaying the first object provided by the editing tool to be placed entirely within the planar VR image;
displaying the first object overlaid on the planar VR image (S930);
obtaining a second object by inversely performing the projection method to project the first object as the second object in a spherical coordinate system (S940);
receiving a second user input to perform a second editing operation on the first object,
in response to receiving the second user input, applying the second editing operation to the second object in the spherical coordinate system (S950),
changing the first object by applying the projection method to the changed second object,
displaying the changed first object overlaid on the planar VR image.

11. The method of claim 10, comprising:
in response to the second user input comprising an operation for changing a size of the first object being received, changing a size of the second object based on the user input; and
changing a shape of the first object based on the second object of which the size is changed according to the projection method.

12. The method of claim 10, further comprising:
in response to the user input comprising an operation for changing a position of the first object from a first position to a second position in the planar VR image, moving the second object to a third position in the spherical coordinate system corresponding to the second position in the planar VR image; and
changing a shape of the first object by performing the projection method on the second object so that the first object to corresponds to the second object having the changed position.

13. The method of claim 10, wherein the displaying of the planar VR image comprises:
in response to the user input comprising an operation for a projection point, a projection angle, and the projection method being received, identifying the area of the spherical VR image based on the projection point and the projection angle; and
obtaining and displaying a planar VR image corresponding to the area based on the projection method.

14. The method of claim 10, further comprising:
in response to the user input comprising an operation for changing a position of the first object from a first position to a fourth position in a preset area of the planar VR image being received, obtaining and displaying a planar VR image corresponding to the fourth position.

15. The method of claim 10, further comprising:
overlaying a lattice type guide graphical user interface, GUI, on the planar VR image and
displaying the lattice type guide GUI overlaid on the planar VR image,
wherein the lattice type guide GUI guides a position corresponding to the planar VR image on the spherical VR image, on the planar VR image.

## Patentansprüche

1. Anzeigevorrichtung (100), die Folgendes aufweist:
einen Speicher (110), der zum Speichern eines Virtuelle-Realität- (VR) -Bilds konfiguriert ist;
eine Benutzerschnittstelle (120);
eine Anzeige (130); und
einen Prozessor (140), der konfiguriert ist zum:
Umwandeln des VR-Bilds in ein sphärisches VR-Bild,
Erhalten eines ebenflächigen VR-Bilds, das einem Bereich des sphärischen VR-Bilds entspricht, gemäß einem Projektionsverfahren,
Steuern der Anzeige (130) zum Anzeigen des ebenflächigen VR-Bilds,
als Reaktion auf eine erste Benutzereingabe durch die Benutzerschnittstelle (120) zum Auswählen eines ersten Objekts aus einem Bearbeitungs-Tool zum Durchführen einer ersten Bearbeitungsoperation an dem ebenflächigen VR-Bild, die empfangen wird, Überblenden des durch das Bearbeitungs-Tool bereitgestellten ersten Objekts, so dass es vollständig in das ebenflächige VR-Bild gelegt wird, und Steuern der Anzeige (130) zum Anzeigen des dem ebenflächigen VR-Bild überblendeten ersten Objekts,
Erhalten eines zweiten Objekts durch umgekehrtes Durchführen des Projektionsverfahrens zum Projizieren des ersten Objekts als das zweite Objekt in einem Kugelkoordinatensystem,
Empfangen einer zweiten Benutzereingabe durch die Benutzerschnittstelle (120) zum Durchführen einer zweiten Bearbeitungsoperation an dem ersten Objekt,
als Reaktion auf das Empfangen der zweiten Benutzereingabe Anwenden der zweiten Bearbeitungsoperation auf das zweite Objekt im Kugelkoordinatensystem,
Ändern des ersten Objekts durch Anwenden des Projektionsverfahrens auf das geänderte zweite Objekt,
Steuern der Anzeige (130) zum Anzeigen des dem ebenflächigen VR-Bild überblendeten geänderten ersten Objekts (330, 430, 510).

2. Anzeigevorrichtung (100) nach Anspruch 1, wobei der Prozessor (140) als Reaktion auf die zweite Benutzereingabe, die eine Operation zum Ändern einer Größe des ersten Objekts aufweist, konfiguriert ist zum:
Ändern einer Größe des zweiten Objekts auf Basis der Benutzereingabe,
Ändern einer Form des ersten Objekts auf Basis des zweiten Objekts, dessen Größe geändert wird, gemäß dem Projektionsverfahren.

3. Anzeigevorrichtung (100) nach Anspruch 1, wobei der Prozessor (140) als Reaktion auf die Benutzereingabe, die eine Operation zum Ändern einer Position des ersten Objekts von einer ersten Position (410-1) auf eine zweite Position (410-2) in dem ebenflächigen VR-Bild aufweist, ferner konfiguriert ist zum:
Bewegen des zweiten Objekts auf eine dritte Position (420-2) im Kugelkoordinatensystem, die der zweiten Position im ebenflächigen VR-Bild entspricht,
Ändern der Form des ersten Objekts durch Durchführen des Projektionsverfahrens am zweiten Objekt, so dass das erste Objekt dem zweiten Objekt, das die geänderte Position hat, entspricht.

4. Anzeigevorrichtung (100) nach Anspruch 1, wobei der Prozessor (140) als Reaktion auf die Benutzereingabe, die eine Operation für einen Projektionspunkt, einen Projektionswinkel und das Projektionsverfahren aufweist, ferner konfiguriert ist zum:
Identifizieren des Bereichs des sphärischen VR-Bilds auf Basis des Projektionspunkts und des Projektionswinkels,
Erhalten und Steuern der Anzeige zum Anzeigen eines dem Bereich entsprechenden ebenflächigen VR-Bilds auf Basis des Projektionsverfahrens.

5. Anzeigevorrichtung (100) nach Anspruch 1, wobei der Prozessor (140) als Reaktion auf eine Benutzereingabe, die eine Operation zum Ändern einer Position des ersten Objekts von einer ersten Position auf eine vierte Position in einem voreingestellten Bereich des ebenflächigen VR-Bilds aufweist, ferner konfiguriert ist zum Erhalten und Steuern der Anzeige (130) zum Anzeigen eines ebenflächigen VR-Bilds, das der vierten Position entspricht.

6. Anzeigevorrichtung (100) nach Anspruch 1, wobei der Prozessor (140) ferner konfiguriert ist zum Überblenden einer grafischen Benutzeroberfläche (GUI) mit Gittertyp-Führung über das ebenflächige VR-Bild und zum Steuern der Anzeige (130) zum Anzeigen der dem ebenflächigen VR-Bild überblendeten Gittertyp-Führungs-GUI, und
wobei die Gittertyp-Führungs-GUI eine Position, die dem ebenflächigen VR-Bild entspricht, auf dem sphärischen VR-Bild führt.

7. Anzeigevorrichtung (100) nach Anspruch 1, wobei der Prozessor (140) ein ebenflächiges VR-Bild anzeigt, das dem Bereich des bearbeiteten sphärischen VR-Bilds entspricht.

8. Anzeigevorrichtung (100) nach Anspruch 1, wobei das ebenflächige VR-Bild durch Umwandeln eines kombinierten Bilds, das durch Kombinieren einer Vielzahl von Bildern erhalten wird, die von einer Vielzahl verschiedener Standpunkte aus aufgenommen sind, in ein ebenflächiges Bild erhalten wird.

9. Anzeigevorrichtung (100) nach Anspruch 1, wobei das aus dem Bearbeitungs-Tool bereitgestellte erste Objekt wenigstens ein von aus einer in einer Bearbeitungsfunktion verwendeten Tool-GUI, einem von der Tool-GUI generierten Bearbeitungsinhalt und einem gemäß der Bearbeitungsfunktion hinzugefügten Inhalt ausgewähltes aufweist.

10. Verfahren zum Steuern einer Anzeigevorrichtung, wobei das Verfahren Folgendes aufweist:
Umwandeln eines VR-Bilds in ein sphärisches VR-Bild (S910);
Erhalten eines ebenflächigen VR-Bilds, das einem Bereich des sphärischen VR-Bilds entspricht, gemäß einem Projektionsverfahren (S920);
Anzeigen des ebenflächigen VR-Bilds;
als Reaktion auf eine erste Benutzereingabe zum Auswählen eines ersten Objekts aus einem Bearbeitungs-Tool zum Durchführen einer ersten Bearbeitungsoperation an dem ebenflächigen VR-Bild, die empfangen wird, Überblenden des durch das Bearbeitungs-Tool bereitgestellten ersten Objekts, so dass es vollständig in das ebenflächige VR-Bild gelegt wird;
Anzeigen des dem ebenflächigen VR-Bild überblendeten ersten Objekts (S930);
Erhalten eines zweiten Objekts durch umgekehrtes Durchführen des Projektionsverfahrens zum Projizieren des ersten Objekts als das zweite Objekt in einem Kugelkoordinatensystem (S940);
Empfangen einer zweiten Benutzereingabe zum Durchführen einer zweiten Bearbeitungsoperation an dem ersten Objekt,
als Reaktion auf das Empfangen der zweiten Benutzereingabe Anwenden der zweiten Bearbeitungsoperation auf das zweite Objekt im Kugelkoordinatensystem (S950),
Ändern des ersten Objekts durch Anwenden des Projektionsverfahrens auf das geänderte zweite Objekt,
Anzeigen des dem ebenflächigen VR-Bild überblendeten geänderten ersten Objekts.

11. Verfahren nach Anspruch 10, das Folgendes aufweist:
als Reaktion auf den Empfang der zweiten Benutzereingabe, die eine Operation zum Ändern einer Größe des ersten Objekts aufweist, Ändern einer Größe des zweiten Objekts auf Basis der Benutzereingabe; und
Ändern einer Form des ersten Objekts auf Basis des zweiten Objekts, dessen Größe geändert wird, gemäß dem Projektionsverfahren.

12. Verfahren nach Anspruch 10, das ferner Folgendes aufweist:
als Reaktion auf die Benutzereingabe, die eine Operation zum Ändern einer Position des ersten Objekts von einer ersten Position auf eine zweite Position in dem ebenflächigen VR-Bild aufweist, Bewegen des zweiten Objekts auf eine dritte Position im Kugelkoordinatensystem, die der zweiten Position im ebenflächigen VR-Bild entspricht, und
Ändern einer Form des ersten Objekts durch Durchführen des Projektionsverfahrens am zweiten Objekt, so dass das erste Objekt dem zweiten Objekt, das die geänderte Position hat, entspricht.

13. Verfahren nach Anspruch 10, wobei das Anzeigen des ebenflächigen VR-Bilds Folgendes aufweist:
als Reaktion auf den Empfang der Benutzereingabe, die eine Operation für einen Projektionspunkt, einen Projektionswinkel und das Projektionsverfahren aufweist, Identifizieren des Bereichs des sphärischen VR-Bilds auf Basis des Projektionspunkts und des Projektionswinkels; und
Erhalten und Anzeigen eines dem Bereich entsprechenden ebenflächigen VR-Bilds auf Basis des Projektionsverfahrens.

14. Verfahren nach Anspruch 10, das ferner Folgendes aufweist:
als Reaktion auf den Empfang der Benutzereingabe, die eine Operation zum Ändern einer Position des ersten Objekts von einer ersten Position auf eine vierte Position in einem voreingestellten Bereich des ebenflächigen VR-Bilds aufweist, Erhalten und Anzeigen eines ebenflächigen VR-Bilds, das der vierten Position entspricht.

15. Verfahren nach Anspruch 10, das ferner Folgendes aufweist:
Überblenden einer grafischen Benutzeroberfläche (GUI) mit Gittertyp-Führung über das ebenflächige VR-Bild und
Anzeigen der dem ebenflächigen VR-Bild überblendeten Gittertyp-Führungs-GUI,
wobei die Gittertyp-Führungs-GUI eine Position, die dem ebenflächigen VR-Bild auf dem sphärischen VR-Bild entspricht, auf dem ebenflächigen VR-Bild führt.

## Revendications

1. Appareil d'affichage (100), comprenant :
un stockage (110), configuré pour stocker une image de réalité virtuelle (VR) ;
une interface d'utilisateur (120) ;
un écran (130) ; et
un processeur (140), configuré pour :
convertir l'image VR en une image VR sphérique,
obtenir une image VR plane correspondant à une zone de l'image VR sphérique selon un procédé de projection,
contrôler l'écran (130) pour qu'il affiche l'image VR plane,
en réponse à la réception d'une première entrée d'utilisateur, par l'intermédiaire de l'interface d'utilisateur (120), pour sélectionner un premier objet depuis un outil d'édition pour réaliser une première opération d'édition sur l'image VR plane, superposer le premier objet fourni par l'outil d'édition pour le placer entièrement dans l'image VR plane et contrôler l'écran (130) pour qu'il affiche le premier objet superposé sur l'image VR plane,
obtenir un second objet en réalisant en sens inverse le procédé de projection pour projeter le premier objet comme le second objet dans un système de coordonnées sphériques,
recevoir une seconde entrée d'utilisateur, par l'intermédiaire de l'interface d'utilisateur (120), pour réaliser une seconde opération d'édition sur le premier objet,
en réponse à la réception de la seconde entrée d'utilisateur, appliquer la seconde opération d'édition au second objet dans le système de coordonnées sphériques,
modifier le premier objet en appliquant le procédé de projection au second objet modifié,
contrôler l'écran (130) pour qu'il affiche le premier objet (330, 430, 510) modifié, superposé sur l'image VR plane.

2. Appareil d'affichage (100) selon la revendication 1, dans lequel, en réponse à la seconde entrée d'utilisateur comprenant une opération pour modifier une taille du premier objet, le processeur (140) est configuré pour :
modifier une taille du second objet sur la base de l'entrée d'utilisateur,
modifier une forme du premier objet sur la base du second objet dont la taille est modifiée selon le procédé de projection.

3. Appareil d'affichage (100) selon la revendication 1, dans lequel, en réponse à l'entrée d'utilisateur comprenant une opération pour modifier une position du premier objet d'une première position (410-1) à une deuxième position (410-2) dans l'image VR plane, le processeur (140) est en outre configuré pour :
déplacer le second objet vers une troisième position (420-2) dans le système de coordonnées sphériques correspondant à la deuxième position dans l'image VR plane,
modifier la forme du premier objet en réalisant le procédé de projection sur le second objet de sorte que le premier objet corresponde au second objet ayant la position modifiée.

4. Appareil d'affichage (100) selon la revendication 1, dans lequel, en réponse à une entrée d'utilisateur comprenant une opération pour un point de projection, un angle de projection et le procédé de projection, le processeur (140) est en outre configuré pour :
identifier la zone de l'image VR sphérique sur la base du point de projection et de l'angle de projection,
obtenir une image VR plane correspondant à la zone sur la base du procédé de projection et contrôler l'écran pour qu'il l'affiche.

5. Appareil d'affichage (100) selon la revendication 1, dans lequel, en réponse à une entrée d'utilisateur comprenant une opération pour modifier une position du premier objet d'une première position à une quatrième position dans une zone prédéfinie de l'image VR plane, le processeur (140) est en outre configuré pour obtenir une image VR plane correspondant à la quatrième position et contrôler l'écran (130) pour qu'il l'affiche.

6. Appareil d'affichage (100) selon la revendication 1, dans lequel le processeur (140) est en outre configuré pour superposer une interface graphique d'utilisateur (GUI)-guide de type treillis sur l'image VR plane et pour contrôler l'écran (130) pour qu'il affiche la GUI-guide de type treillis superposée sur l'image VR plane, et
la GUI-guide de type treillis guidant une position correspondant à l'image VR plane sur l'image VR sphérique.

7. Appareil d'affichage (100) selon la revendication 1, dans lequel le processeur (140) affiche une image VR plane correspondant à la zone de l'image VR sphérique éditée.

8. Appareil d'affichage (100) selon la revendication 1, dans lequel l'image VR plane est obtenue en convertissant une image combinée, qui est obtenue en combinant une pluralité d'images capturées depuis une pluralité de points de vue différents, en une image plane.

9. Appareil d'affichage (100) selon la revendication 1, dans lequel le premier objet fourni par l'outil d'édition comprend au moins un élément sélectionné parmi une GUI d'outils utilisée dans une fonction d'édition, un contenu d'édition généré par la GUI d'outils et un contenu ajouté selon la fonction d'édition.

10. Procédé de contrôle d'un appareil d'affichage, le procédé consistant à :
convertir une image VR en une image VR sphérique (S910) ;
obtenir une image VR plane correspondant à une zone de l'image VR sphérique selon un procédé de
projection (S920) ;
afficher l'image VR plane ;
en réponse à la réception d'une première entrée d'utilisateur pour sélectionner un premier objet depuis un outil d'édition pour réaliser une première opération d'édition sur l'image VR plane, superposer le premier objet fourni par l'outil d'édition pour le placer entièrement dans l'image VR plane ;
afficher le premier objet superposé sur l'image VR plane (S930) ;
obtenir un second objet en réalisant en sens inverse le procédé de projection pour projeter le premier objet comme le second objet dans un système de coordonnées sphériques (S940) ;
recevoir une seconde entrée d'utilisateur pour réaliser une seconde opération d'édition sur le premier objet ;
en réponse à la réception de la seconde entrée d'utilisateur, appliquer la seconde opération d'édition au second objet dans le système de coordonnées sphériques (S950) ;
modifier le premier objet en appliquant le procédé de projection au second objet modifié ;
afficher le premier objet modifié superposé sur l'image VR plane.

11. Procédé selon la revendication 10, consistant à :
en réponse à la réception de la seconde entrée d'utilisateur comprenant une opération pour modifier une taille du premier objet, modifier une taille du second objet sur la base de l'entrée d'utilisateur ; et
modifier une forme du premier objet sur la base du second objet dont la taille est modifiée selon le procédé de projection.

12. Procédé selon la revendication 10, consistant en outre à :
en réponse à l'entrée d'utilisateur comprenant une opération pour modifier une position du premier objet d'une première position à une deuxième position dans l'image VR plane, déplacer le second objet vers une troisième position dans le système de coordonnées sphériques correspondant à la deuxième position dans l'image VR plane ; et
modifier une forme du premier objet en réalisant le procédé de projection sur le second objet de sorte que le premier objet corresponde au second objet ayant la position modifiée.

13. Procédé selon la revendication 10, dans lequel l'affichage de l'image VR plane consiste à :
en réponse à la réception de l'entrée d'utilisateur comprenant une opération pour un point de projection, un angle de projection et le procédé de projection, identifier la zone de l'image VR sphérique sur la base du point de projection et de l'angle de projection ; et
obtenir et afficher une image VR plane correspondant à la zone sur la base du procédé de projection.

14. Procédé selon la revendication 10, consistant en outre à :
en réponse à la réception de l'entrée d'utilisateur comprenant une opération pour modifier une position du premier objet d'une première position à une quatrième position dans une zone prédéfinie de l'image VR plane, obtenir et afficher une image VR plane correspondant à la quatrième position.

15. Procédé selon la revendication 10, consistant en outre à :
superposer une interface graphique d'utilisateur (GUI)-guide de type treillis sur l'image VR plane ; et
afficher la GUI-guide de type treillis superposée sur l'image VR plane,
la GUI-guide de type treillis guidant, sur l'image VR plane, une position correspondant à l'image VR plane sur l'image VR sphérique.
